# EUROPEAN PATENT SPECIFICATION

(11) **EP 1 602 525 B1**
(45) Date of publication and mention of the grant of the patent: **16.04.2008**
(21) Application number: 05010677.2
(22) Date of filing: 17.05.2005
(51) Int. Cl.: B60N 2/30

(54) **Seat device for a vehicle and vehicle provided therewith**
Fahrzeugsitz und mit diesem Sitz ausgerüstetes Fahrzeug.
Siège pour véhicule et véhicule équipé de ce siège.

(30) Priority: 03.06.2004 JP 2004165683
(43) Date of publication of application: 07.12.2005
(73) Proprietor: Mazda Motor Corporation, Aki-gun, Hiroshima 730-8670 (JP)
(72) Inventor: Toyota, Minoru, Aki-gun Hiroshima 730-8670 (JP)
(74) Representative: Müller-Boré & Partner Patentanwälte

(56) References cited:
- EP-A- 0 982 184
- EP-A- 1 400 399
- WO-A-00/41911
- WO-A-91/18778
- US-A1- 2004 100 117
- PATENT ABSTRACTS OF JAPAN vol. 1998, no. 06, 30 April 1998 (1998-04-30) -& JP 10 035334 A (FUJI HEAVY IND LTD), 10 February 1998 (1998-02-10)

## Description

The present invention relates to a seat device for a vehicle which comprises a driver seat, an assistant seat and a rear seat disposed behind them, and to a vehicle provided therewith.

Conventionally, various types of seat devices for a vehicle comprising the driver seat, the assistant seat and the rear seat disposed behind them have been devised.

For example, Japanese Patent Laid-Open Publication No. 10-35334 discloses the seat device for a vehicle in which there are provided a rear floor, a floor portion at a higher level, and a load floor at a further higher level, and a seat cushion of a rear seat is provided on the floor portion and a seat back of the rear seat is attached to a front end of the load floor via hinges. Herein, a front row seat is moved forward, and then the seat cushion of the rear seat is rotated forward and the seat back of the rear seat is located on the above-described floor portion via the hinges. Thus, the seat cushion of the rear seat is located horizontally in the longitudinal direction, and back faces of the seat cushion and seat back of the rear seat and the load floor are made flat. Accordingly, a continuous and relatively large load space can be formed.

In the above-described conventional seat device for a vehicle, however, there may occur a gap between the rear end of the front row seat moved forward and the front end of the seat cushion of the rear seat rotated forward. Also, the front row seat is moved forward, just maintaining its normal use (sitting) position. Accordingly, this conventional seat device still has a problem that a sufficiently large, flat and continuous load space could not be obtained.

WO 00/41911 A discloses a seat arrangement for a motor vehicle comprising a number of seats arranged so as to be movable between different mutual positions along at least two parallel rails. A seat part of the seats is pivotably mounted in relation to a backrest part, so that the seat part can assume a first folded-down position and a second position in which it is folded up against the backrest part.

EP-A-0 982 184 discloses a rear seat arrangement for an automotive vehicle comprising an adjustable seat which is supported on a vehicle floor disposed beneath a loading space floor.

The present invention has been devised in view of the above problem, and an object of the present invention is to provide a seat device for a vehicle and a vehicle provided therewith, which can form the sufficiently large, substantially flat and/or substantially continuous load space in the longitudinal direction in the cabin, thereby improving both the large load space and the roomy cabin for passengers.

This object is solved by a seat device for a vehicle according to the present invention of claim 1 and by a vehicle according to claim 10. Preferred embodiments of the present invention are subject of the dependent claims.

According to the present invention, there is provided a seat device for a vehicle, which is or is to be (directly or indirectly) disposed on or near a floor panel in a cabin equipped with an instrument panel at or near a front side, comprising a driver seat, an assistant seat provided beside the driver seat, the assistant seat being foldable and movable forward closer or close to the instrument panel so as to be located in or near a stored position thereof in which a length or longitudinal extension of the folded seat is made short, and a rear seat provided behind (or in a position being arranged in a more backward direction with respect to) the assistant seat, the rear seat being foldable and movable forward so as to be located in or near a stored position thereof which is located substantially behind (or in a position being arranged in a more backward direction with respect to) the stored position of the assistant seat, wherein the assistant seat in the stored position and the rear seat in the stored position provide a substantially continuous storage space thereon which is (at least partly) formed or defined by back faces of respective seat backs of the assistant seat and the rear seat, wherein there is provided a load or rear floor in back of or behind the rear seat which is located at a different or higher level than the floor panel, the seat back is foldable forward onto a seat cushion of the rear seat and the folded seat is movable forward and downward towards the stored position on the floor panel, and a substantially continuous load space is formed by the back face of the seat back of the rear seat substantially in the stored position and the load floor.

The above-described assistant seat in the stored position may be configured by an operation (tip-up) in such a manner that the seat cushion thereof is raised towards or in an upright position at least partly facing to the seat back. According to this structure, the assistant seat is substantially folded and moved forward to its stored position close to the instrument panel, where the length or longitudinal extension of the folded seat is made short. Meanwhile, the rear seat is substantially folded and moved forward towards or to its stored position with the seat back pivoted forward or substantially on the seat cushion thereof. Thereby, the back faces of respective seat backs of the assistant seat and the rear seat are arranged at an angle different from 0° or 180°, preferably substantially normal with respect to each other or formed in a substantially L-shape.

Accordingly, a substantially continuous storage space is formed so as to extend from an original position of the assistant seat in use to a rear position in the cabin, by the assistant seat substantially in its stored position and the rear seat substantially in its stored position. Thus, the large, substantially flat and/or substantially continuous load space can be formed in the longitudinal direction in the cabin, thereby improving both the large load space and the roomy cabin for passengers.

According to this structure, since the back face of the seat back of the rear seat and the load floor are substantially continuous and/or substantially flush, the flat and large load space can be formed so as to be used properly. Also, the substantially continuous load floor formed can improve the quality and storing function of the load space properly.

According to another preferred embodiment, a headrest is provided at or near a top portion of the seat back of the rear seat, and the rear seat is configured such that the headrest of the rear seat in the stored position is located at least partly between the assistant seat in the stored position and the floor panel.

According to this structure, since the headrest of the rear seat is located at least partly between the assistant seat in the stored position and the floor panel, there can be also a continuous face in the vehicle width direction WD.

According to another preferred embodiment, the rear seat is configured such that a lower end of the assistant seat in the stored position contacts a front end of the seat back of the rear seat in the stored position.

According to this structure, since substantially no gap exits between the lower end of the assistant seat in the stored position and the front end of the seat back of the rear seat in the stored position, the utility and appearance can be improved properly.

According to another preferred embodiment, there is provided a slide rail which supports the assistant seat movably between the above-described forward stored position and a longitudinally backward position, preferably near the load floor.

Herein, this slide rail may be attached to a tunnel portion and a side sill. According to this structure, since the assistant seat is movable in the longitudinal direction between the forward stored position and the backward position near the load floor, a proper seat arrangement can be provided.

According to another preferred embodiment, the rear seat can be folded in tip-up position where a seat cushion thereof is pivoted upwardly and the assistant seat can be moved rearward, preferably along the slide rail towards or to its rear position close to the rear seat, preferably near the rear floor.

According to another preferred embodiment, a seat cushion of the assistant seat substantially in or near its rear position can be pivoted upwardly so as to be arranged close to a seat back of the assistant seat.

According to another preferred embodiment, the rear seat is foldable and movable forward so as to be located in a stored position thereof via a link mechanism being mountable to a portion of the cabin.

According to another preferred embodiment, the link mechanism is releasably fixed to the portion of the cabin by a releasable latching mechanism.

According to the invention, there is further provided a vehicle provided with a seat device according to the invention or a preferred embodiment thereof.

Other features, aspects, and advantages of the present invention will become apparent from the following description which refers to the accompanying drawings.
FIG. 1 is a side view of a vehicle equipped with a seat device for a vehicle according to the present invention.
FIG. 2 is a plan view of a major portion of FIG. 1.
FIG. 3 is a perspective view illustrating a disposition structure of seats.
FIG. 4 is an enlarged side view of the major portion of FIG. 1.
FIG. 5 is a view seen along line A-A of FIG. 4.
FIG. 6 is a perspective view illustrating a seat support structure.
FIG. 7 is a perspective view illustrating another embodiment of the seat device support structure.
FIG. 8 is a side view illustrating a tip-up state of an assistant seat.
FIG. 9 is a side view illustrating a state of a rear seat on the way to its stored position.
FIG. 10 is a side plan view illustrating the rear seat in its stored position.
FIG. 11 is a perspective view of FIG. 10.
FIG. 12 is a side view illustrating an exemplified loading.
FIG. 13 is a side view illustrating another seat arrangement.
FIG. 14 is a side view illustrating further another seat arrangement.
FIG. 15 is a side view illustrating further another seat arrangement.

Hereinafter, preferred embodiments of the present invention will be described referring to the accompanying drawings. It should be understood that even though embodiments are separately described, single features thereof may be combined to additional embodiment.

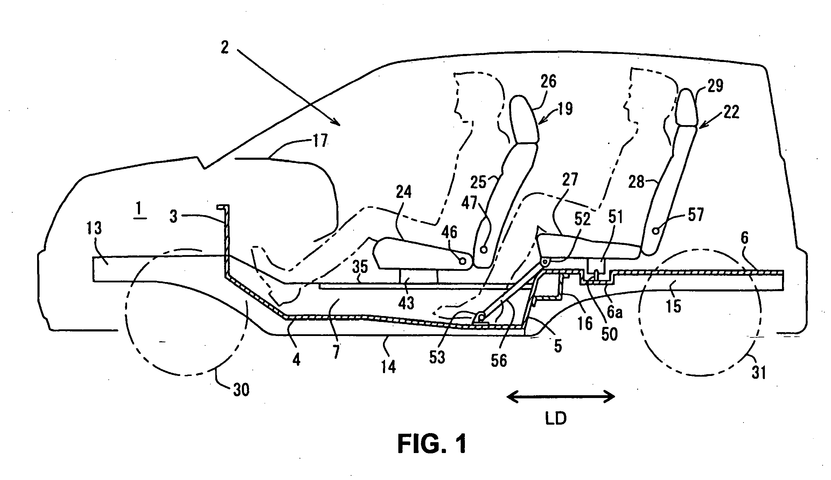

The drawings illustrate a preferred seat device for a vehicle. First, a vehicle body structure will be described referring to FIGS. 1, 2 and 3. There is provided a dash lower panel (dash panel) 3 which separates a cabin or passenger compartment 2 from an engine room or compartment 1 longitudinally. A floor panel 4 is connected to a lower end of the dash panel 3 so as to extend substantially rearward, preferably substantially horizontally. A rear floor 6 is connected to a rear portion of the floor panel 4 via a kickup or slanted portion 5. The rear floor 6 preferably is located at a higher level than the floor panel 4.

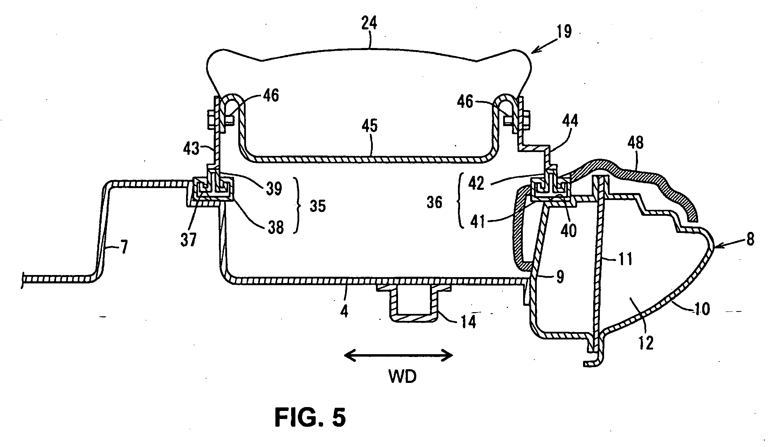

At a central portion of the floor panel 4 is integrally or unitarily formed a tunnel portion 7 so as to project toward an inside of the cabin 2 and extend substantially in a longitudinal direction LD. And, at both sides of the floor panel 4 are fixed side sills 8, 8, as preferred vehicle-body rigidity members. Each side sill 8 comprises, as illustrated in FIG. 5, a side sill inner 9, a side sill outer 10 and a side sill reinforcement 11, which form a side sill substantially closed section 12 extending substantially longitudinally.

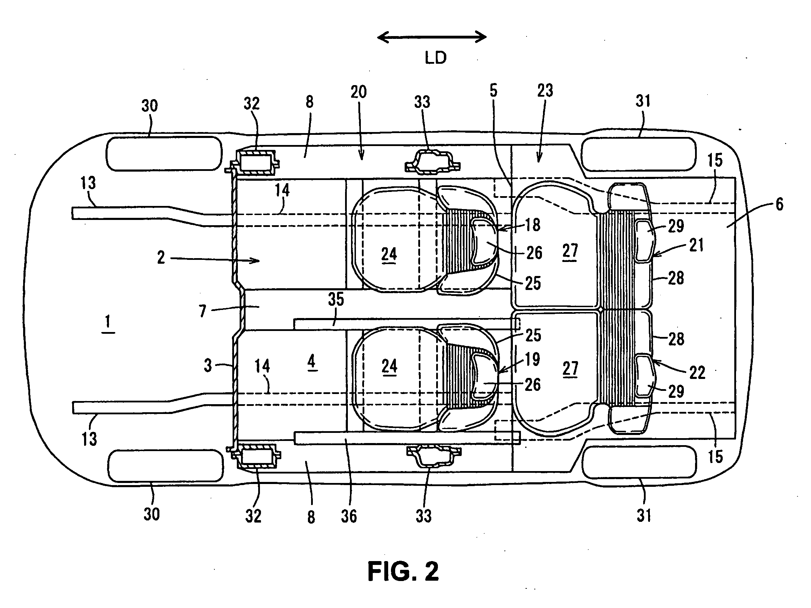

Meanwhile, as illustrated in FIGS. 1 and 2, a pair of front side frames 13, 13 (front frames) is provided so as to extend substantially in the longitudinal direction LD at or near both sides in the engine room 1. Rear portions of the front side frames 13, 13 are formed substantially along the dash lower panel 3, and their rear end portions are continuously connected to a pair of floor frames 14, 14 which extends substantially longitudinally.

These front side frames 13, 13 and floor frames 14, 14 preferably functions as vehicle-body rigidity members. The floor frames 14, 14 are fixed or fixable to a lower face of the floor panel 4 of the floor panel 4 to form substantially closed cross sections extending substantially in the longitudinal direction LD of the vehicle between them 4 and 14.

Also, a pair of rear side frames 15, 15 are fixed or fixable to or near a lower face of the rear floor 6 of to form substantially closed cross sections extending substantially in the longitudinal direction LD of the vehicle between them . Further, to a corner portion between the kickup portion 5 and the rear floor 6 is fixed a rear cross member 16 which extends substantially in the vehicle width direction WD or substantially along the kickup portion 5.

On the floor panel 4 in the cabin 2 equipped with an instrument panel 17 at the front side are provided a front row seat 20, which comprises a driver seat 18 and an assistant seat 19 provided beside or adjacent to the driver seat 18, and a rear row seat 23, which preferably comprises a right seat 21 and a left seat 22, which are disposed substantially behind the front row seat 20.

The driver seat 18 and the assistant seat 19, which form part of the front row seat 20, include the seat cushions 24, seat backs 25 and preferably headrests 26, respectively. Likewise, the right seat 21 and the left seat 22, which form part of the rear seat 23, include seat cushions 27, their seat backs 28 and preferably headrests 29, respectively.

The above-described rear floor 6 is formed so as to extend from or behind the seat cushions 27 of the rear seat 23 toward the rear of the vehicle. In FIGS. 1 through 3, reference numerals 30 denote vehicle front wheels, reference numerals 31 denote vehicle rear wheels, reference numerals 32 denote front or hinge pillars (A-post), reference numerals 33 denote center pillars (B-post), and reference numeral 34 denotes a steering wheel.

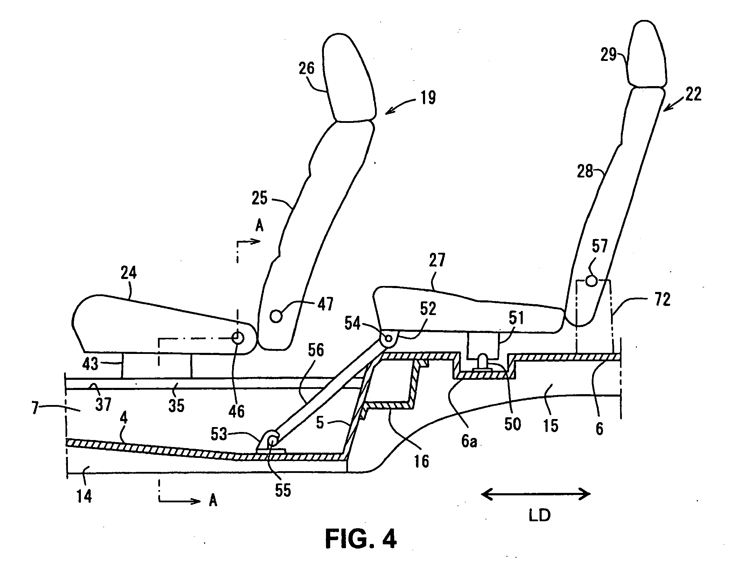

Next, the structure of this preferred seat device for a vehicle will be described referring to FIGS. 4 through 10. As illustrated in FIGS. 4 and 5, a pair of slide rails 35 and 36 to guide and move the assistant seat 19 between its forward position close (or closer position) to the instrument panel 17 and its backward position (or distanced position) is provided preferably on the tunnel portion 7 and the side sill 8.

A recess portion 37 preferably is formed at a corner portion of the tunnel portion 7 at the side of the assistant seat 19. A lower rail 38 extending substantially longitudinally is fixed or mountable in the recess portion 37, and an upper rail 39 is provided so as to be supported by and move substantially along the lower rail 38. These lower rail 38 and upper rail 39 form part of the seat slide rail 35.

Likewise, a recess portion 40 is formed at a corner portion of the side sill inner 9 of the side sill 8 at the side of the assistant seat 19. A lower rail 41 extending longitudinally is fixed in the recess portion 40, and an upper rail 42 is provided so as to be supported by and move substantially along the lower rail 41. These lower rail 41 and upper rail 42 form part of the seat slide rail 36.

In order to constitute the assistant seat 19 being movable longitudinally substantially along the above-described seat slides 35 and 36, support members 43 and 44 are attached to the both upper rails 39 and 42, and a seat pan 45 of the assistant seat 19 is pivotally supported at these support members 43 and 44 via pivots 46, 46 so as to be rotatable or pivotable around an axis preferably extending substantially in the widthwise direction WD.

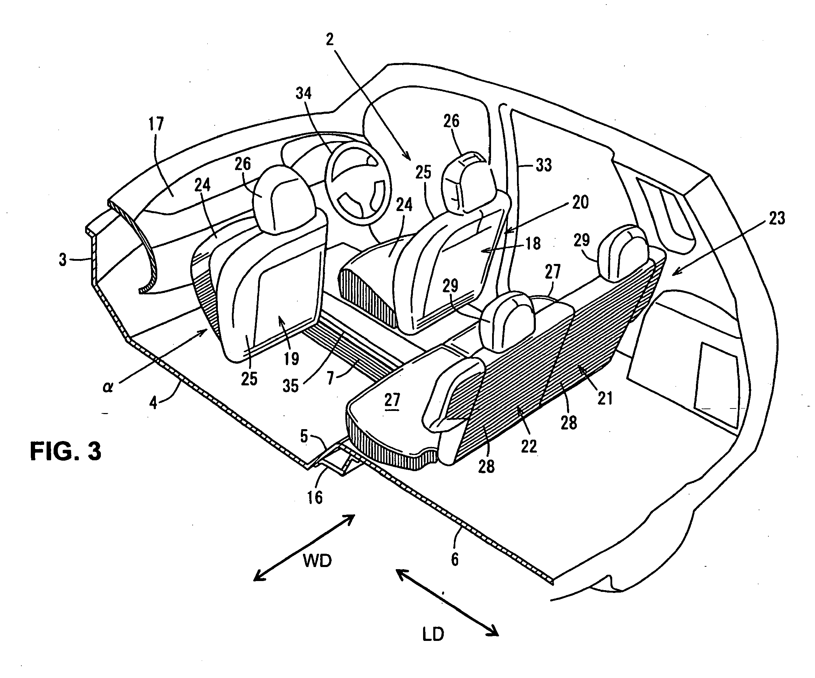

The assistant seat 19 is configured so as to be foldable preferably by an operation (tip-up) in such a manner that the seat cushion 24 is rotated or pivoted around the pivot 46 and raised toward or in its substantially upright position facing to the seat back 25 as illustrated in FIG. 3. In this position of the assistant seat 19, a length of the folded assistant seat 19 along the longitudinal direction LD is made short.

Also, the assistant seat 19 is configured such that the seat back 25 is or can be changed or moved towards or to its reclined position via another pivot 47 for reclining.

Meanwhile, as illustrated in FIG. 5, there is provided a scarf plate 48 which at least partly covers upper and side portions of the side sill inner 9, a connecting portion of the side sill inner 9 and the side sill outer 10, and an upper portion of the side sill outer 10, except the movable portion of the seat slide rail 39, preferably so as to provide proper appearances.

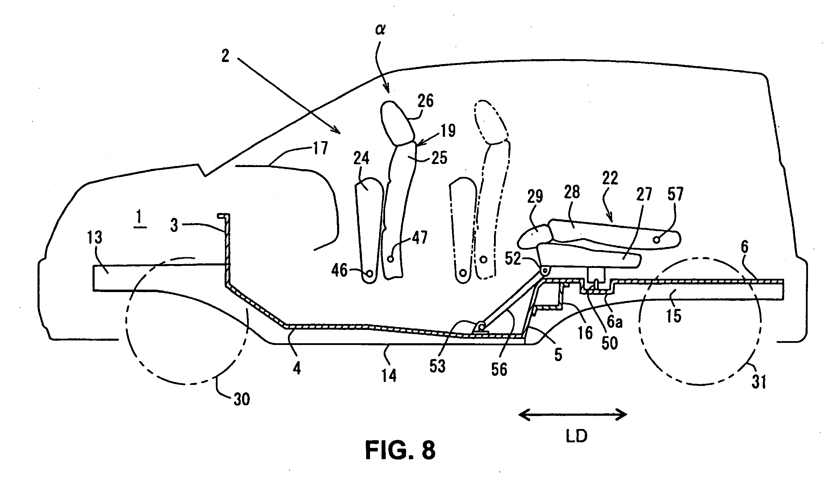

And, the assistant seat 19 can be supported in its forward stored position α, as illustrated in FIGS. 3 and 8, by the tip-up operation and/or the forward moving along the seat slide rails 35 and 36 close or closer to the instrument panel 17, where the length along the longitudinal direction LD of the folded seat 19 is made short.

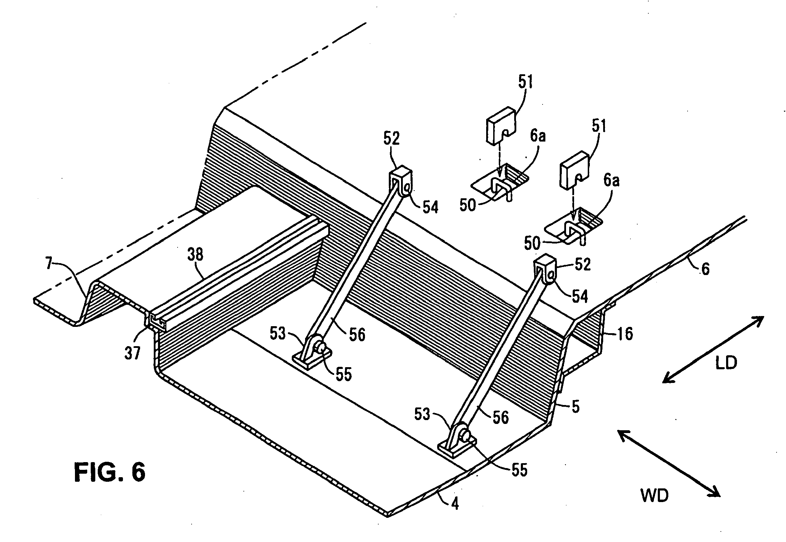

Next, the support structure of the left seat 22 of the rear row seat 23 (i.e., the rear seat located substantially behind the assistant seat 19) will be described referring to FIGS. 4 and 6.

At the rear floor 6 below the seat cushion 27 of the left seat 22 are formed one or more, preferably two recess portions 6a, 6a with a specified (predetermined or predeterminable) separate distance from each other in the vehicle width direction WD. Strikers 50, 50 are fixed in the recess portions 6a, 6a.

Further, there are provided one or more latches 51, 51 at the bottom face of the seat cushion 27 so as to engage or be engageable with the above-described strikers 50, 50. An engagement of these strikers 50, 50 with latches 51, 51 holds or latches the seat cushion 27 in its sitting position.

Herein, the engagement of the strikers 50, 50 and latches 51, 51 is unlocked (released) preferably by a manual operation of a lock releasing strap, wire, shaft or the like. Further, two hinge brackets 52, 52 are attached to the bottom face of the seat cushion 27, where is offset laterally from the above-described latches 51, 51, and one or more, preferably two hooks 53, 53 are attached to floor panel 4, in positions substantially corresponding to the latches 51, 51 (preferably aligned substantially along the widthwise direction WD but spaced substantially along the longitudinal direction LD).

Also, there is provided one or more, preferably a pair of links 56, 56 which comprises respective pins 54, 54 and 55, 55 at both end portions thereof respectively. The links 56, 56 interconnect the upper hinge brackets 52, 52 and the lower hooks 53, 53 via pin connections.

The hinge bracket(s) 52, 52 is/are pivotally connected at the upper pin(s) 54, 54, respectively, and the hook(s) 53, 53 is/are pivotally connected at the lower pin(s) 55, 55. These hook(s) 53, 53 is/are configured so as to be locked and unlocked with the lower pin(s) 55, 55.

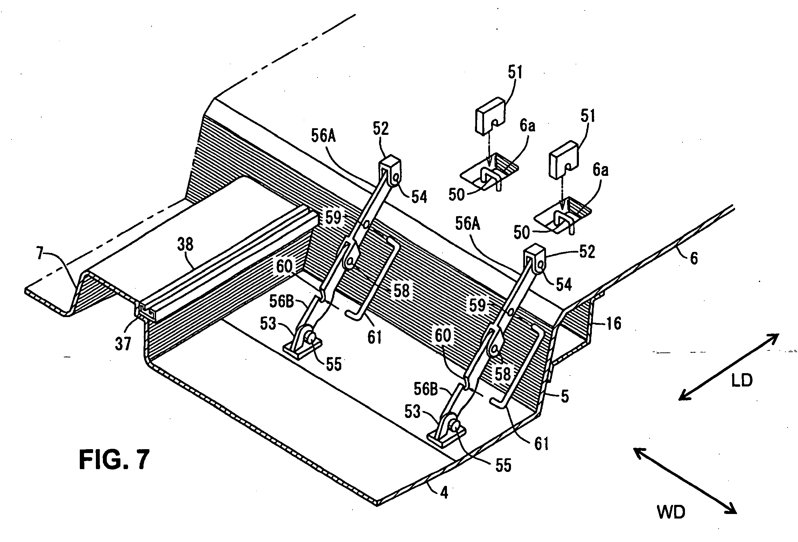

Meanwhile, the seat back 28 of the left seat 22 is supported at the pivot 57 so as to be in the reclined position. Herein, a link structure illustrated in FIG. 7 may be applied instead of the link 56 illustrated in FIG. 6.

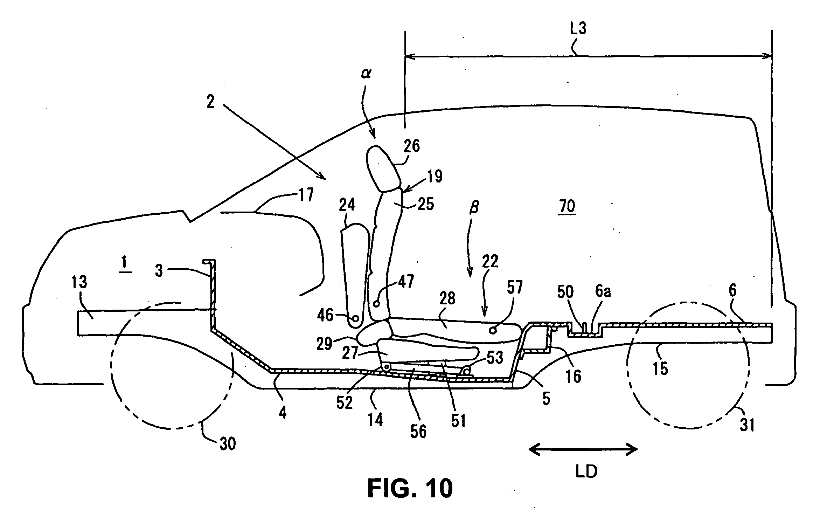

In the link structure of FIG. 7, one or more upper links 56A, 56A and one or more lower links 56B, 56B are connected via one or more respective pivots 58, 58, and there are provided one or more rods 61, 61 which extend between one or more holes 59, 59 formed at the upper link(s) 56A, 56A and one or more notches 60, 60 formed at the lower link(s) 56B, 56B, and lock the rod(s) 61, 61 in its/their extended position(s). Thus, in the case where the left seat 22 is located in the sitting position (see FIG. 4), the rod(s) 61, 61 is/are provided extending between the holes 59, 59 and the notches 60, 60. Meanwhile, in the case where the left seat 22 is moved towards or to its substantially stored position β (see FIG. 10), which is described below, respective lower portions of the rods 61, 61 are removed from the notches 60, 60, keeping their upper portions inserting in the holes 59, 59, thereby allowing the upper and lower links 56A, 56A and 56B, 56B to be bent or pivoted with respect to each other. Thus, the operation of the seat for the storing can be improved.

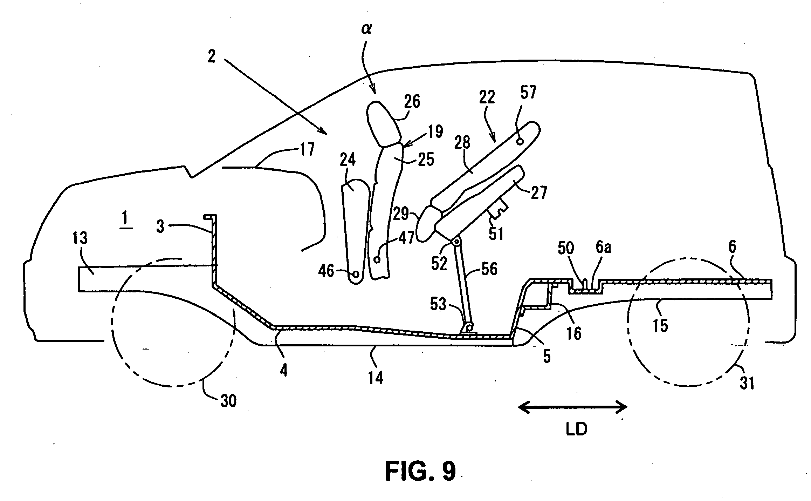

Herein, the similar or same components as those illustrated in FIG. 6 are denoted by the same reference numerals in FIG. 7, whose detailed descriptions are omitted. Thus, when the assistant seat 19 is or can be located in its stored position α illustrated in FIGS. 3 and 8, the seat back 28 of the left seat 22 is rotated forward and folded on the seat back 27 (see FIG. 8) and then moved forward via the links 56, 56 to the stored position β illustrated in FIG. 10, which provides a substantially continuous storage space 70 formed or defined or limited by back faces of the seat back 28 and the seat back 25 of the assistant seat 19, by way of its position state illustrated in FIG. 9.

Also, when the left seat 22 is located in its stored position β illustrated in FIG. 10, a substantially continuous and/or substantially flat load space (see a storing space 70) is formed by the back face of the seat back 28 of the left seat 22 and the rear floor 6 as a load floor (the back face of the seat back 28 of the left seat 22 being substantially flush with the rear floor 6).

Further, when the left seat 22 is located in its stored position β illustrated in FIG. 10, the headrest 29 of the left seat 22 is located between the assistant seat 19 in the stored position α and the floor panel 4.

Also, when the headrest 29 of the left seat 22 in its stored position β is located substantially between the assistant seat 19 in the stored position α and the floor panel 4 as illustrated in FIG. 10, a lower end of the seat back 25 of the assistant seat 19 in the stored position α preferably substantially contacts a front end of the seat back 28 of the left seat 22 in the stored position β, preferably resulting in substantially no gap exiting between the lower end of the assistant seat 19 and the front end of the seat back 28 of the left seat 22.

The function and effect of this seat device for a vehicle which is configured as described above will be described in detail. In the case where the driver seat 18, assistant seat 19, right seat 21, and left seat 22 are located in their normal use positions respectively as illustrated in FIGS. 1, 2 and 4, passengers can sit on the respective seats, thereby providing comfortable sitting for the passengers.

Meanwhile, in the case where it is required for the assistant seat 19 to be located in the stored position α illustrated in FIG. 3, the seat back 25 of the assistant seat 19 illustrated by a solid line in FIG. 4 is operated so as to be located in its substantially upright position around the pivot 47 and the seat cushion 24 is also tip-up towards or to its substantially upright position, as illustrated by a dotted broken line in FIG. 8, and then the assistant seat 19 is moved substantially along the seat slide rails 35 and 36 towards or to the forward stored position close to the instrument panel 17. Thus, the assistant seat 19 can be located in the stored position α illustrated in FIGS. 3 and 8.

Herein, in order to form the large, substantially flat and/or substantially continuous load space by locating the left seat 22 of the rear seat 23 in the stored position β (see FIG. 10), the seat back 28 of the left seat 22 in the normal use position illustrated in FIG. 4 is rotated or pivoted forward (or toward the seat cushion 27) around the pivot 57 and folded towards or substantially on the seat cushion 27 as illustrated in FIG. 8.

Then, after the latch(es) 51 with striker(s) 50 is/are disengaged, the folded left seat 22 is moved or movable (or pivoted/pivotable) forward and/or substantially upward via the links 56 around or over the pins 54 and 55 as illustrated in FIG. 9.

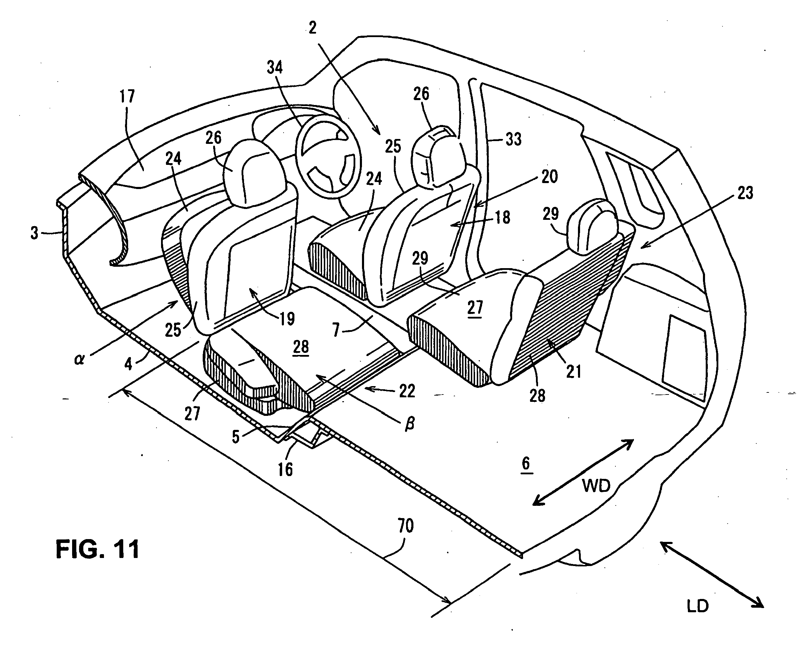

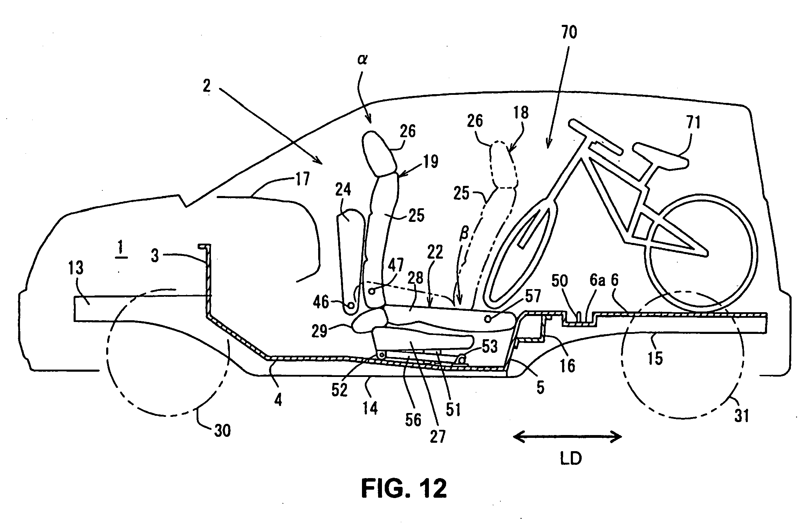

Next, the folded left seat 22 with the seat cushion 27, seat back 28 and headrest 29 is moved or movable (or pivoted/pivotable) substantially downward via the links 56 towards or to its stored position β on the floor panel 4 in such a manner that the headrest 29 of the left seat goes down below the seat back 25 of the assistant seat 19 in the stored position β, as illustrated in FIGS. 9 and 10. Thus, the left seat 22 is located in the stored position β. Accordingly, the back face of the seat back 25 of the assistant seat 19 and the back face of the seat back 28 of the left seat 22 are made substantially continuous in the L-shape or angled shape, and the substantially flat storage space 70 having the great (preferably maximum) length L3 (see FIGS. 10 and 11) is formed or defined by the back face of the seat back 28 of the left seat 22 and the rear floor 6. As a result, relatively tall and long things 71 can be loaded easily (see FIG. 12).

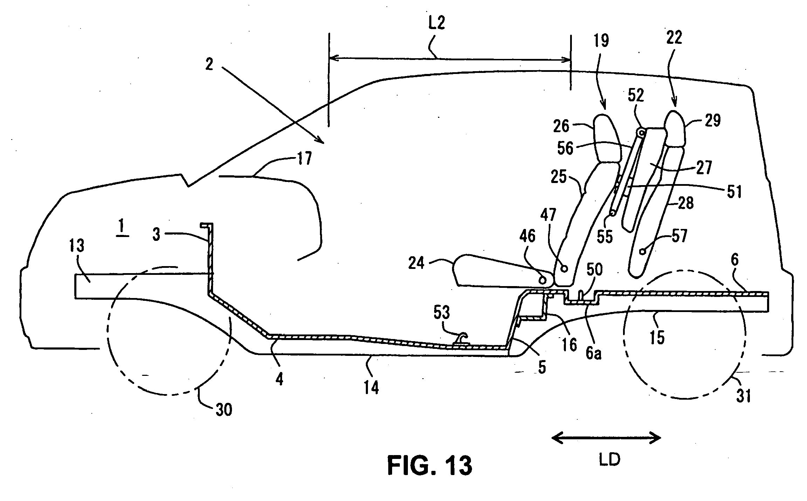

Meanwhile, another seat arrangement illustrated in FIG. 13 can be provided. Namely, the left seat 22 is folded in its tip-up position and the assistant seat 19 is moved rearward along the seat slide rails 35 and 36 to its rear position near the rear floor 6 as illustrated in the figure.

Herein, the left seat 22 can be folded as illustrated in FIG. 13 by disengaging the latch(es) 51 with striker(s) 50, unlocking the hook(s) 53 from the pin(s) 55 at the lower end of the link(s) 56, and then raising the seat cushion 27 of the left seat 22 towards or to the substantially upright position towards or substantially facing to the seat back 28 around the pivots 57. The left seat 22 may be held in this position preferably by a proper means. For example, one or more, preferably a pair of support members 72, 72, which is illustrated by a dotted broken line in FIG. 4, may be applied to support the left seat 22 via the above-described pivots 57.

After the left seat 22 has been folded as illustrated in FIG. 13, the assistant seat 19 is moved rearward along the seat slide rails 35 and 36 to the rear position near the rear floor 6.

Since there can be provided a relatively long distance L2 between the instrument panel 17 and the seat back 25 of the assistant seat 19 in this arrangement illustrated in FIG. 13, the comfortable sitting for the passenger on the assistant seat 19 can be obtained.

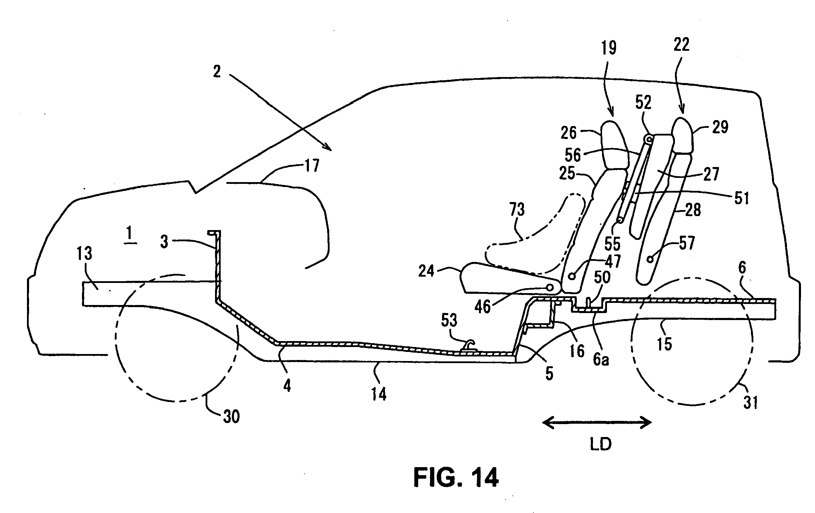

Also, a child seat 73 may be installed on the assistant seat 19 located in the rear position near the rear floor 6 as illustrated in FIG. 14. In this case, a baby in the child seat 17 can be taken care of easily by a person from the side of the floor panel 4.

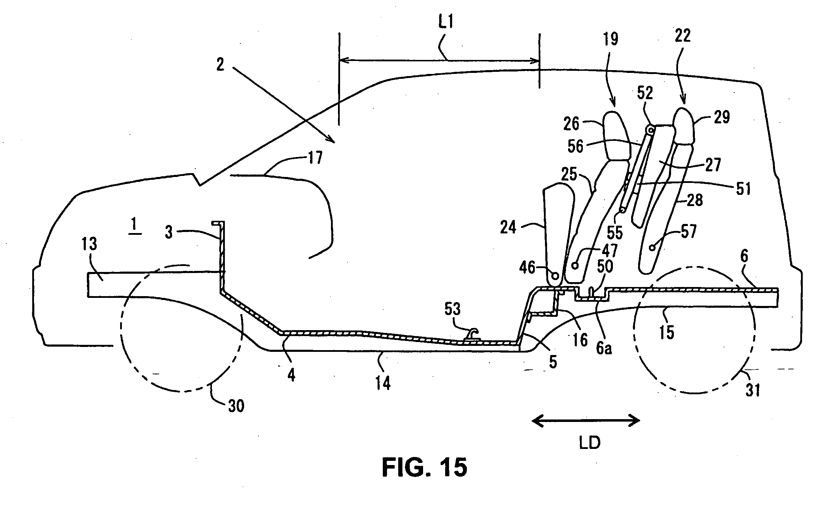

Further, changing the seat cushion 24 of the assistant seat 19 towards or in the tip-up position from the state illustrated in FIG. 13 can provide further another seat arrangement illustrated in FIG. 15. Herein, since there can be provided a relatively long distance L1 between the instrument panel 17 and the seat cushion 24 of the assistant seat 19, relatively long things can be loaded properly in this place.

According to the above-described embodiments, there is provided the seat device for a vehicle, which is to be disposed on the floor panel 4 in the cabin 2 equipped with the instrument panel 17 at the front side, comprising the driver seat 18, the assistant seat 19 provided beside or in a position shifted along the widthwise direction WD the driver seat 18, the assistant seat 19 being foldable and movable forward close to the instrument panel 17 so as to be located in the stored position α in which the length or longitudinal extension of the folded seat 19 is reduced or made short, and the rear seat (see the left seat 22) provided substantially behind the assistant seat 19, the rear seat (see the left seat 22) being foldable and movable forward so as to be located in the stored position β which is located behind the stored position α of the assistant seat 19, wherein the assistant seat 19 in the stored position α and the rear seat (see the left seat 22) in the stored position β provide the substantially continuous or integral storage space 70 (see FIG. 10) thereon which is formed by back faces of respective seat backs 25 and 28 of the assistant seat 19 and the rear seat (see the left seat 22).

In the present embodiment, the assistant seat 19 in the stored position α is configured by the operation (tip-up) in such a manner that the seat cushion 24 is raised towards or in the upright position facing to the seat back 25.

According to this structure, the assistant seat 19 is folded and moved forward towards or to its stored position α close to the instrument panel 17, where the length of the folded seat 19 is reduced or made short.

Meanwhile, the rear seat (see the left seat 22) is folded and moved forward to its stored position β with the seat back 28 on the seat cushion 27 thereof. Thereby, the back faces of respective seat backs 25 and 28 of the assistant seat 19 and the rear seat (see the left seat 22) are arranged at an angle different from 0° or 180°, preferably substantially normal with respect to each other, or formed in the substantially L-shape.

Accordingly, the substantially continuous storage space 70 is formed so as to extend from the original position of the assistant seat 19 in use to the rear position in the cabin 2, by the assistant seat 19 near or substantially in its stored position α and the rear seat (see the left seat 22) in its stored position β. The large, substantially flat and/or substantially continuous load space 70 can be formed in the longitudinal direction in the cabin 2, thereby improving both the large load space 70 and the roomy cabin 2 for passengers.

Further, there is provided the load floor (see the rear floor 6) in back of or behind the rear seat (see the left seat 22) which preferably is located at the higher level than the floor panel 4, and the substantially continuous load space is formed by the back face of the seat back 28 of the rear seat (see the left seat 22) in the stored position β and the load floor (see the rear floor 6).

According to this structure, since the back face of the seat back 28 of the rear seat (see the left seat 22) and the load floor (see the rear floor 6) are substantially continuous, the flat and large load space (see the storage space 70) can be formed so as to be used properly. Also, the continuous load floor formed can improve the quality and storing function of the load space properly.

Further, the headrest 29 preferably is provided at the top portion of the seat back 28 of the rear seat (see the left seat 22), and the rear seat (see the left seat 22) is configured such that the headrest 29 of the rear seat (see the left seat 22) in the stored position β is located between the assistant seat 19 in the stored position α and the floor panel 4.

According to this structure, since the headrest 29 of the rear seat (see the left seat 22) is located between the assistant seat 19 in the stored position α and the floor panel 4, there can be or form also the substantially continuous face in the vehicle width direction WD.

Also, the rear seat (see the left seat 22) is configured such that the lower end of the assistant seat 19 in the stored position α contacts the front end of the seat back 28 of the rear seat (see the left seat 22) in the stored position β.

According to this structure, since preferably substantially no gap exits between the lower end of the assistant seat 19 in the stored position α and the front end of the seat back 28 of the rear seat (see the left seat 22) in the stored position β, the utility and/or appearance can be improved properly.

Additionally, there are provided the slide rails 35 and 36 which support the assistant seat 19 movably between the above-described forward stored position α closer or close (or adjacent or neighboring) to the instrument panel 17 and the backward position closer or near or towards the load floor (see the rear floor 6).

According to this structure, since the assistant seat 19 is movable substantially in the longitudinal direction LD along the slide rails 35 and 36 between the forward stored position and the backward position, the proper seat arrangement can be provided.

The driver seat preferably corresponds to the driver seat 18 of the above described embodiment. Likewise, the assistant seat preferably corresponds to the assistant seat 19, the rear seat preferably corresponds to the left seat 22, the load floor preferably corresponds to the rear floor 6, the headrest preferably corresponds to the headrest 29. However, the present invention should not be limited to the above-described embodiments, by any other modifications and improvements may be applied within the scope of the present invention. It should be e.g. understood that the back of the rear seat 22 in its stored position β may be slightly inclined e.g. not completely horizontal.

## Claims

1. A seat device for a vehicle, which is to be disposed on a floor panel (4) in a cabin (2) equipped with an instrument panel (17) at a front side, comprising:
a driver seat (18);
an assistant seat (19) provided beside said driver seat (18), the assistant seat (19) being foldable and movable forward close to the instrument panel (17) so as to be located in a stored position (α) thereof in which a length of the folded seat (19) is made short; and
a rear seat (22) provided behind said assistant seat (19), the rear seat (22) being foldable and movable forward so as to be located in a stored position (β) thereof which is located behind and/or below said stored position (α) of the assistant seat (19),
wherein said assistant seat (19) in the stored position (α) and said rear seat (22) in the stored position (β) can provide a substantially continuous storage space (70) thereon which is formed by back faces of respective seat backs (25, 28) of said assistant seat (19) and said rear seat (22),
**characterized in that**
there is provided a load floor (6) in back of said rear seat (22) which is located at a higher level than the floor panel (4), that the seat back (28) of the rear seat (22) is foldable forward onto the seat cushion (27) and the folded rear seat (22) is movable forward and downward towards the stored position (β) on the floor panel (4), and a substantially continuous load space is formed by the back face of the seat back (28) of said rear seat (22) in the stored position (β) and said load floor (6).

2. The seat device for a vehicle of claim 1, wherein a headrest (29) is provided at or near a top portion of the seat back (28) of said rear seat (22), and said rear seat (22) is configured such that said headrest (29) of said rear seat (22) in the stored position (β) is located at least partly between the said assistant seat (19) in the stored position (α) and the floor panel (4).

3. The seat device for a vehicle of one of the preceding claims, wherein said rear seat (22) is configured such that a lower end of said assistant seat (19) in the stored position (α) contacts a front end of said seat back (28) of the rear seat (22) in the stored position (β).

4. The seat device for a vehicle of one of the preceding claims, wherein the rear seat (22) is hinged (52) to a link (56) so as to be substantially downward pivotable.

5. The seat device for a vehicle of one of the preceding claims, wherein there is provided a slide rail (35, 36) which supports said assistant seat (19) movably between said forward stored position (α) and a longitudinally backward position, preferably near said load floor (6).

6. The seat device for a vehicle of one of the preceding claims, wherein the rear seat (22) can be folded in tip-up position where a seat cushion (27) thereof is pivoted upwardly and the assistant seat (19) can be moved rearward (FIG. 13), preferably along the slide rail (35, 36) towards or to its rear position close to the rear seat (22), preferably near the rear floor (6).

7. The seat device for a vehicle according to claim 6, wherein a seat cushion (24) of the assistant seat (19) substantially in its rear position can be pivoted upwardly (FIG. 15) so as to be arranged close to a seat back (25) of the assistant seat (19).

8. The seat device for a vehicle of one of the preceding claims, wherein the rear seat (22) is foldable and movable forward so as to be located in a stored position (β) thereof via a link mechanism (54-56) being mountable to a portion (4) of the cabin (2).

9. The seat device for a vehicle of claim 8, wherein the link mechanism (54-56) is releasably fixed to the portion (4) of the cabin (2) by a releasable latching mechanism (53, 55).

10. A vehicle provided with a seat device according to one of the preceding claims.

## Patentansprüche

1. Sitzvorrichtung für ein Fahrzeug, die auf bzw. an einem Bodenblech bzw. einer Bodenplatte (4) in einem Fahrgastraum (2) angeordnet ist, welcher mit einem Armaturenbrett (17) auf einer Vorderseite ausgerüstet ist, umfassend:
einen Fahrersitz (18);
einen Beifahrersitz (19), der neben dem Fahrersitz (18) bereitgestellt ist, wobei der Beifahrersitz (19) nach vorne in die Nähe des Armaturenbretts (17) klappbar bzw. faltbar und bewegbar ist, so dass er sich in seiner verstauten bzw. Lagerposition (α) befindet, in der eine Länge des geklappten Sitzes (19) kurz gemacht ist; und
einen Rücksitz (22), der hinter dem Beifahrersitz (19) bereitgestellt ist, wobei der Rücksitz (22) nach vorne klappbar und beweglich ist, so dass er sich in einer Lagerposition (β) befindet, die sich hinter und/oder unter der Lagerposition (α) des Beifahrersitzes (19) befindet,
wobei der Beifahrersitz (19) in der Lagerposition (α) und der Rücksitz (22) in der Lagerposition (β) einen im Wesentlichen zusammenhängenden Lagerraum (70) darauf bzw. daran bereitstellen können, der durch Rückflächen jeweiliger Sitzlehnen (25, 28) des Beifahrersitzes (19) und des Rücksitzes (22) gebildet wird,
**dadurch gekennzeichnet, dass**
eine Ladefläche (6) hinter dem Rücksitz (22) gebildet ist, die sich auf einer höheren Höhe als die Bodenplatte (4) befindet, dass die Sitzrückenlehne (28) des Rücksitzes (22) nach vorne auf das Sitzpolster (27) klappbar ist und der geklappte Rücksitz (22) nach vorne und unten in Richtung der Lagerposition (β) auf bzw. an der Bodenplatte (4) beweglich ist und ein im Wesentlichen zusammenhängender Laderaum durch die Rückfläche der Sitzrückenlehne (28) des Rücksitzes (22) in der Lagerposition (β) und die Ladefläche (6) gebildet wird.

2. Sitzvorrichtung für ein Fahrzeug nach Anspruch 1, wobei eine Kopfstütze (29) an oder nahe dem obersten Abschnitt der Sitzrückenlehne (28) des Rücksitzes (22) bereitgestellt ist, und der Rücksitz (22) derart aufgebaut ist, dass die Kopfstütze (29) des Rücksitzes (22) in der Lagerposition (β) sich zumindest teilweise zwischen dem Beifahrersitz (19) in der Lagerposition (α) und der Bodenplatte (4) befindet.

3. Sitzvorrichtung für ein Fahrzeug nach einem der vorangehenden Ansprüche, wobei der Rücksitz (22) derart aufgebaut ist, dass ein unteres Ende des Beifahrersitzes (19) in der Lagerposition (α) ein vorderes Ende der Sitzrückenlehne (28) des Rücksitzes (22) in der Lagerposition (β) berührt.

4. Sitzvorrichtung für ein Fahrzeug nach einem der vorangehenden Ansprüche, wobei der Rücksitz (22)an einer Verbindung bzw. einem Gelenk (56) drehbar (52) befestigt bzw. gelenkig angebracht ist, so dass er im Wesentlichen nach unten drehbar bzw. schwenkbar ist.

5. Sitzvorrichtung für ein Fahrzeug nach einem der vorangehenden Ansprüche, wobei eine Gleitschiene (35, 36) bereitgestellt ist, die den Beifahrersitz (19) beweglich zwischen der vorderen Lagerposition (α) und einer in Längsrichtung hinteren Position, bevorzugt nahe der Ladefläche (6), lagert bzw. trägt

6. Sitzvorrichtung für ein Fahrzeug nach einem der vorangehenden Ansprüche, wobei der Rücksitz (22) in die aufrechte Position gefaltet werden kann, wobei sein Sitzpolster (27) nach oben geschwenkt ist, und der Beifahrersitz (19) nach hinten bewegt werden kann (Fig. 13), und zwar bevorzugt entlang der Gleitschiene (35, 36) in Richtung oder zu seiner hinteren Position nahe dem Rücksitz (22), bevorzugt nahe dem hinteren Boden (6).

7. Sitzvorrichtung für ein Fahrzeug nach Anspruch 6, wobei ein Sitzpolster (24) des Beifahrersitzes (19) im Wesentlichen in dessen hinterer Position nach oben geschwenkt werden kann (Fig. 15), um nahe einer Rückenlehne (25) des Beifahrersitzes (19) angeordnet zu sein.

8. Sitzvorrichtung für ein Fahrzeug nach einem der vorangehenden Ansprüche, wobei der Rücksitz (22) über einen Gelenkmechanismus (54 - 56), der an einen Abschnitt (4) des Fahrgastraums (2) montierbar ist, klappbar bzw. faltbar und nach vorne beweglich ist, so dass er in seiner Lagerposition (β) angeordnet wird.

9. Sitzvorrichtung für ein Fahrzeug nach Anspruch 8, wobei der Gelenkmechanismus (54 - 56) durch einen lösbaren Arretier- bzw. Verriegelungs- bzw. Einrastmechanismus (53, 55) lösbar an dem Abschnitt (4) des Fahrgastraums (2) befestigt ist.

10. Fahrzeug, das mit einer Sitzvorrichtung nach einem der vorangehenden Ansprüche ausgerüstet ist.

## Revendications

1. Dispositif de siège pour un véhicule automobile, lequel doit être agencé sur un panneau de plancher (4) dans un habitacle (2) équipé d'un tableau d'instruments (17) sur une face frontale, comprenant :
un siège de conducteur (18) ;
un siège de passager avant (19) prévu à côté dudit siège de conducteur (18), le siège de passager avant (19) pouvant être replié et déplacé vers l'avant à proximité du tableau d'instruments (17) de manière à être placé dans une position de rangement (α) de celui-ci dans laquelle une longueur du siège replié (19) est rendue courte ; et
un siège arrière (22) prévu derrière ledit siège de passager avant (19), le siège arrière (22) pouvant être replié et déplacé vers l'avant de manière à être placé dans une position de rangement (β) de celui-ci, laquelle est placée derrière et/ou en dessous de ladite position de rangement (α) du siège de passager avant (19),
dans lequel ledit siège de passager avant (19) dans la position de rangement (α) et ledit siège arrière (22) dans la position de rangement (β) peuvent fournir sur eux-mêmes un espace de chargement sensiblement continu (70) qui est formé par les faces arrières des dossiers de siège respectifs (25, 28) dudit siège de passager avant (19) et dudit siège arrière (22),
**caractérisé en ce que**
un plancher de chargement (6) est prévu derrière ledit siège arrière (22), lequel est placé à un niveau plus haut que le panneau de plancher (4), **en ce que** le dossier de siège (28) du siège arrière (22) peut être replié vers l'avant sur le coussin de siège (27) et le siège arrière replié (22) peut être déplacé vers l'avant et vers le bas vers la position de rangement (β) sur le panneau de plancher (4), et **en ce qu'**un espace de chargement sensiblement continu est formé par la face arrière du dossier de siège (28) dudit siège arrière (22) dans la position de rangement (β) et par ledit plancher de chargement (6).

2. Dispositif de siège pour un véhicule automobile selon la revendication 1, dans lequel un repose-tête (29) est prévu sur ou à proximité d'une partie supérieure du dossier de siège (28) dudit siège arrière (22), et dans lequel ledit siège arrière (22) est configuré de telle sorte que, dans la position de rangement (β), ledit repose-tête (29) dudit siège arrière (22) est placé au moins partiellement entre ledit siège de passager avant (19) dans la position de rangement (α) et le panneau de plancher (4).

3. Dispositif de siège pour un véhicule automobile selon l'une des revendications précédentes, dans lequel ledit siège arrière (22) est configuré de telle sorte que, dans la position de rangement (α), une extrémité inférieure dudit siège de passager avant (19) contacte une extrémité avant dudit dossier de siège (28) du siège arrière (22) dans la position de rangement (β).

4. Dispositif de siège pour un véhicule automobile selon l'une des revendications précédentes, dans lequel le siège arrière (22) est monté en pivotement (52) à une barre de liaison (56) de manière à pouvoir être pivoté sensiblement vers le bas.

5. Dispositif de siège pour un véhicule automobile selon l'une des revendications précédentes, dans lequel est prévu un rail de coulissement (35, 36) qui porte ledit siège de passager avant (19) avec possibilité de déplacement entre ladite position de rangement à l'avant (α) et une position vers l'arrière en sens longitudinal, de préférence à proximité dudit plancher de chargement (6).

6. Dispositif de siège pour un véhicule automobile selon l'une des revendications précédentes, dans lequel le siège arrière (22) peut être replié dans une position de strapontin où un coussin de siège (27) de celui-ci est pivoté vers le haut, et dans lequel le siège de passager avant (19) peut être déplacé vers l'arrière (figure 13), de préférence le long du rail de coulissement (35, 36) vers ou sur sa position arrière à proximité du siège arrière (22), de préférence à proximité dudit plancher arrière (6).

7. Dispositif de siège pour un véhicule automobile selon la revendication 6, dans lequel un coussin de siège (24) du siège de passager avant (19) sensiblement dans sa position arrière peut être pivoté vers le haut (figure 15), de manière à être disposé à proximité d'un dossier de siège (25) du siège de passager avant (19).

8. Dispositif de siège pour un véhicule automobile selon l'une des revendications précédentes, dans lequel le siège arrière (22) peut être replié et déplacé vers l'avant de manière à être placé dans une position de rangement (β) de celui-ci par l'intermédiaire d'un mécanisme de liaison (54 - 56) pouvant être monté sur une partie (4) de l'habitacle (2).

9. Dispositif de siège pour un véhicule automobile selon la revendication 8, dans lequel le mécanisme de liaison (54 - 56) est fixé avec possibilité de déverrouillage à la partie (4) de l'habitacle (2) par un mécanisme de verrouillage pouvant être déverrouillé (53, 55).

10. Véhicule prévu avec un dispositif de siège selon l'une des revendications précédentes.
